# EUROPEAN PATENT APPLICATION

(11) **EP 1 376 996 A2**
(43) Date of publication of application: **02.01.2004**
(21) Application number: 03251869.8
(22) Date of filing: 25.03.2003
(51) Int. Cl.: H04M 1/725, H04L 12/28

(54) **Internet cordless phone**

(30) Priority: 25.06.2002 KR 2002035666
(71) Applicant: Netcodec Co, Limited, Daejon-city (KR); Institute of Information Technology Assessment, Daejeon-City (KR)
(72) Inventor: Park, Sang Gyu, Yusong-Gu, Daejeon-City (KR)
(74) Representative: Stuttard, Garry Philip

(57) **Abstract**

An Internet cordless phone enabling a plurality of users to wirelessly make Internet calls at the same time over one Internet line is provided. The provided Internet cordless phone includes an Internet phone station for processing an Internet phone protocol and cordless handsets for processing audio codec and user interface, wherein the Internet phone station and the cordless handsets are connected by Bluetooth asynchronous connection-less (ACL) links. By using the provided Internet cordless phone, a maximum of seven people can make Internet calls over one Internet line so that the cost of making calls is reduced and mobility limitations are overcome.

## Description

### BACKGROUND OF THE INVENTION

### 1. Field of the Invention

The present invention relates to a method and an apparatus for making calls over the Internet, and more particularly, to an Internet cordless phone for connecting an Internet cordless phone station connected to the Internet and cordless handsets via a Bluetooth cordless link.

### 2. Description of the Related Art

Conventional Internet phones for making calls over the Internet include the following three types.

A first type of conventional Internet phone is formed to have a single body, like a general telephone. In this case, no more than two people can make calls at the same time and the Internet phone cannot be used at a distant location as in the case of a general telephone.

A second type of conventional Internet phone uses a gateway device for connecting a plurality of telephones so that a plurality of people can make calls over the Internet at the same time. However, such an Internet phone causes discomfort, because the telephones have to be connected to the gateway device via telephone lines.

A third type of conventional Internet phone provides a cordless telephony function by using cordless handsets and Bluetooth access points according to the Bluetooth standard. Methods for realizing the cordless telephony function include a cordless telephony profile method and a LAN access profile method. Here, the cordless telephony profile method limits the number of users who make calls at the same time. The LAN access profile method allots virtual Internet protocol (IP) addresses to each cordless handset, so that each cordless handset can make calls to the outside; however, each cordless handset cannot receive calls from the outside.

### SUMMARY OF THE INVENTION

To solve the above-described problems, it is an objective of the present invention to provide a method for a maximum of seven people to make telephone calls at the same time over one Internet line while eliminating limitation in the used area of a conventional Internet phone by allowing each of a maximum of seven cordless handsets to establish cordless links to one Internet phone station and by communicating packet-type audio data between the Internet phone station and corresponding cordless handset through the established cordless links.

To accomplish the objective of the present invention, an Internet phone station comprises a communication process and system control unit for converting audio packets of a user into Internet protocol (IP) data according to an Internet phone protocol, extracting audio packets from the IP data transmitted from the other side, and wirelessly transmitting data to and receiving data from a cordless handset; a memory unit for storing programs to be performed in the communication process and system control unit and data; a real time clock (RTC) unit for generating date and time data to transmit the data to the communication process and system control unit and establishing date and time data according to commands from the communication process and system control unit; a Bluetooth radio frequency (RF) transceiver unit for transferring the audio packets output from the communication process and system control unit to the cordless handset and transmitting the audio packets from the cordless handset to the communication process and system control unit; and an Internet connection unit connected to the Internet for transferring the audio packets from the cordless handset according to the Internet phone protocol and receiving Internet phone protocol data from the other side.

To accomplish the objective of the present invention, a cordless handset for an Internet phone comprises a communication process and handset control unit for processing communication required for wirelessly exchanging data with an Internet phone station and controlling each function unit; a user input unit for receiving commands from a user and transferring the commands to the communication process and handset control unit; a screen display unit for displaying information input by the user and information on the state of the handset; a memory unit for storing programs to be performed in the communication process and handset control unit and telephone numbers; an audio process unit for converting digital audio data transferred from the communication process and handset control unit into analog signals to output to a speaker and converting audio signals from a microphone into digital audio data to transfer to the communication process and handset control unit; and a Bluetooth RF transceiver unit for transmitting audio packets from the communication process and handset control unit to the Internet phone station and receiving audio packets from the Internet phone station to transfer to the communication process and handset control unit.

To accomplish the objective of the present invention, an Internet cordless phone comprises an Internet phone station connected to the Internet for receiving data transmitted by the H.323 method or the SIP method as an international standard and a cordless handset for compressing audio packets from a user according to the G.723.1 or G.729 international standard to transmit to the Internet phone station through a Bluetooth ACL link.

To accomplish the objective of the present invention, a method of connecting a calling signal for a cordless handset to make an Internet call, the method comprises establishing an ACL link to an Internet phone station; receiving the Internet telephone number of the other side; transmitting a setup message required for a call establishment, which corresponds to the received Internet telephone number, to the Internet phone station through the established ACL link; transmitting a message demanding call connection from the Internet phone station, which received the setup message, to the other side over the Internet; receiving a call process message from the Internet phone station through the established ACL link, after transmitting the message demanding call connection; receiving an alert process message from the other side by the Internet phone station and receiving an alert message from the Internet phone station through the established ACL link; receiving a connection message from the Internet phone station through the ACL link according to the completion of a call connection over the Internet by the Internet phone station; and transmitting a connection acknowledgement message to the Internet phone station through the ACL link when receiving the connection message.

To accomplish the objective of the present invention, a method of connecting a receiving signal for a cordless handset to receive an Internet call, the method comprises receiving a message demanding call connection from an Internet phone station; establishing an ACL link to the Internet phone station when the received message demanding call connection corresponds to the cordless handset; receiving a setup message required for establishing a call from the Internet phone station, which has received the call connection message from the other side, through the established ACL link; transmitting an alert message to the Internet phone station through the established ACL link according to receipt of the setup message and transmitting an alert process message from the Internet phone station to the other side; transmitting a connection message to the Internet phone station through the established ACL link according to the Internet phone station, which has transmitted the alert process message, and transmitting a call connection completion message from the Internet phone station, which received the connection message, to the other side; and receiving a connection acknowledgement message from the Internet phone station through the established ACL link after the Internet phone station received the call connection completion message, in order to establish a call channel.

To accomplish the objective of the present invention, a data structure, which is used for transferring compressed audio data through an ACL link and formed of a protocol identifier field, a message type field, and a transmitting data filed of variable length corresponding to the values of the protocol identifier field and the message type filed is provided, wherein the transmitting data field of variable length transmits the compressed audio data in the case where the protocol identifier field stores data denoting the transfer of the compressed audio data through the ACL link.

To accomplish the objective of the present invention, a data structure used for transferring compressed audio data through an ACL link, the data structure comprises a protocol identifier field for representing a data to be transferred is a compressed audio data; a message type field for representing the state of use of a flow control function and the state or receipt of the compressed audio data in the case where the protocol identifier field stores data denoting the transfer of the compressed audio data; and a transmitting data field of variable length for storing a compressed audio data corresponding to the protocol identifier field and the message type field.

To accomplish the objective of the present invention, a recording medium, which can be read out by a computer, is provided to perform the method by a computer.

### BRIEF DESCRIPTION OF THE DRAWINGS

The above objectives and advantages of the present invention will become more apparent by describing in detail preferred embodiments thereof with reference to the attached drawings in which:
FIG. 1 is a block diagram of an Internet cordless phone according to the present invention;
FIG. 2 is a block diagram illustrating the configuration of an Internet phone station in the Internet cordless phone according to the present invention;
FIG. 3 is a detailed block diagram illustrating the Internet phone station according to the present invention;
FIG. 4A illustrates a software protocol stack, which is mounted in ROM of a communication process and system control unit;
FIG. 4B illustrates a software protocol stack mounted in ROM of a communication process and system control unit, which is used when communicating with a cellular phone having a Bluetooth interface;
FIG. 5 is a block diagram illustrating a cordless handset of the Internet cordless phone according to the present invention;
FIG. 6 is a detailed block diagram illustrating the cordless handset according to the present invention;
FIG. 7 illustrates a software protocol stack, which is mounted in ROM of a communication process and handset control unit;
FIG. 8 illustrates an example of a calling signal connection process for making an Internet call using a cordless handset according to the present invention;
FIG. 9 illustrates an example of a receiving signal connection process for receiving an Internet call from the outside using a cordless handset according to the present invention;
FIG. 10 illustrates a call release process for ending a telephone call; and
FIGS. 11A through 11C illustrate the data configurations of packets used in an asynchronous connection-less (ACL) link.

### DETAILED DESCRIPTION OF THE INVENTION

The present invention will now be described more fully with reference to the accompanying drawings, in which preferred embodiments of the invention are shown.

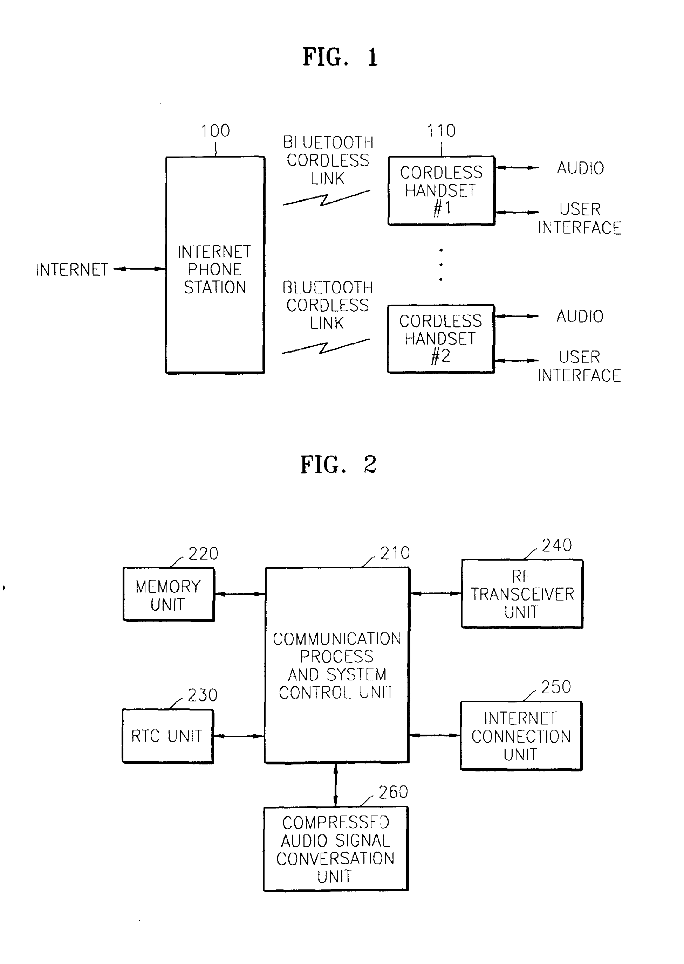

FIG. 1 is a block diagram illustrating an embodiment of an Internet cordless phone according to the present invention. Referring to FIG. 1, the Internet cordless phone is formed of an Internet phone station 100 and cordless handsets 110.

FIG. 2 is a block diagram illustrating the configuration of an embodiment of the Internet phone station 100 in the Internet cordless phone according to the present invention. Referring to FIG. 2, the Internet phone station 100 is a location-fixed device and includes a communication process and system control unit 210, a memory unit 220, a real time clock (RTC) unit 230, a Bluetooth radio frequency (RF) transceiver unit 240, an Internet connection unit 250, and a compressed audio signal conversion unit 260. The Internet phone station 100 establishes and releases calls with respect to a maximum of seven cordless handsets via the Bluetooth cordless link, to transmit and receive coded audio data and user interface data, and processes Internet phone protocol by using an asymmetric digital subscriber line (ADSL) modem or an Ethernet connection module.

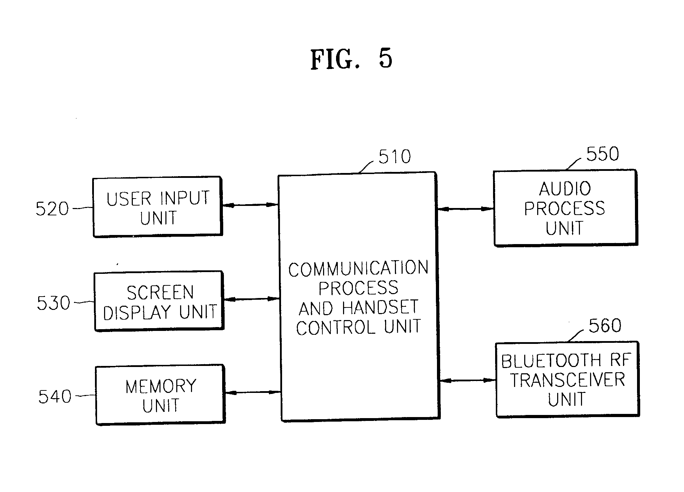

FIG. 5 is a block diagram illustrating a cordless handset of the Internet cordless phone according to the present invention. Referring to FIG. 5, the cordless handset 110 includes a communication process and handset control unit 510, a user input unit 520, a screen display unit 530, a memory unit 540, an audio process unit 550, and a Bluetooth RF transceiver unit 560. Here, the cordless handset 110 having an audio codec function and a user interface function establishes and releases calls with respect to the Internet phone station 100 via the Bluetooth cordless link to transmit and receive coded audio data and user interface data. Accordingly, a user can make calls by using the cordless handset 110 like making calls by using a general cordless telephone.

The communication process and system control unit 210 is formed of a high-speed processor module, a Bluetooth RF transceiver interface module, a Bluetooth baseband process module, a memory control module, and a general-purpose input/output unit, which are operated by programs. Here, the communication process and system control unit 210 processes an Internet phone protocol and processes communications for exchanging cordless data with the cordless handsets.

The Internet phone protocol is processed by the H.323 method or the session initiation protocol (SIP) method as the international standard. The communication process for exchanging cordless data with the cordless handsets is performed via an asynchronous connection-less (ACL) link, which enables the establishment of cordless links between one master and seven slaves according to the Bluetooth standard.

The Bluetooth system defines two kinds of links, i.e., synchronous connection-oriented (SCO) links and ACL links, in order to provide multimedia application service. The SCO link, which is used for general audio calls while transmitting SCO link data by a circuit switched method, operates symmetrically and supports point-to-point communication. Such a link has two continuous slots, i.e., a forward slot and a return slot, with a specific interval.

The ACL link, which is used for transferring burst data while transmitting ACL link data by a packet-switched method, operates symmetrically or asymmetrically and supports point-to-multipoint communication. The master uses a polling method to control ACL communication.

In addition, the master exchanges call establishment and release messages, audio codec data, and user interface data with the cordless handsets corresponding to the slaves, via the ACL link. Each cordless handset is distinguished according to predetermined Internet phone numbers.

Here, the Internet phone numbers may be formed of 4-byte Internet IP address for the station and identification (ID) numbers for the cordless handsets. For example, when the ID number of a specific handset is 2 and the Internet IP address of the Internet phone station is 218.34.52.219, the Internet phone number of the handset becomes 218.34.52.219.2. In addition, a handset can have another number, which is formed of identifier number # or @, telephone number, and ID number. For example, the other Internet phone number of a handset can be established as #042-828-6043-1.

Furthermore, the communication process and system control unit 210 receives date and time data from the RTC unit 230 and transfers the data to the cordless handsets, periodically.

The memory unit 220 is formed of a flash memory for storing programs that will be performed by the communication process and system control unit 210 or data that will be stored for a long time, and RAM for storing temporary data.

The RTC unit 230 generates the date and time data and transfers the data to the communication process and system control unit 210, or renews the date and time data according to commands from the communication process and system control unit 210. The date and time data is periodically transferred to the cordless handsets by the communication process and system control unit 210. In addition, the user may directly renew the date and time data via the cordless handsets.

The Bluetooth RF transceiver unit 240 transfers signals output through the Bluetooth RF transceiver interface of the communication process and system control unit 210 to the cordless handsets, and transfers signals output from the cordless handsets to the communication process and system control unit 210.

The Internet connection unit 250 transmits data to and receives data from other communication devices over the Internet by using a general-purpose ADSL modem or an Ethernet connection module.

A compressed audio signal conversion unit 260 converts a continuous variable slop delta (CVSD) audio signal or pulse coded modulation (PCM) audio signal into a G.723.1 audio signal, or converts a G.723.1 audio signal into a CVSD or PCM audio signal, in order to transfer the converted audio signal to the communication process and system control unit 210. With the compressed audio signal conversion unit 260, a CVSD or PCM audio signal transferred from a cellular phone with the Bluetooth function via the SCO link can be converted into the G.723.1 audio signal and transferred to the Internet phone station. In addition, due to the compressed audio signal conversion unit 260, the G.723.1 audio signal can be converted into the CVSD or PCM audio signal and transferred to the cellular phone with the Bluetooth function. Accordingly, the cellular phone with the Bluetooth function can be used as the handset of a cordless telephone.

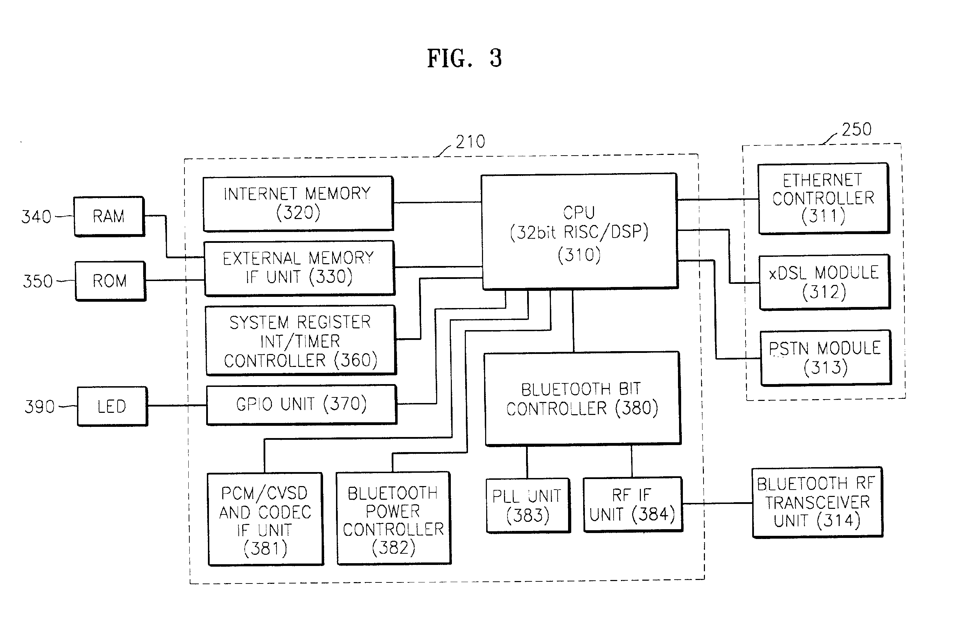

FIG. 3 is a detailed block diagram illustrating an embodiment of the Internet phone station.

A central processing unit (CPU) 310, which is a 32-bit RISC processor, processes digital signal process (DSP) commands. The communication process and system control unit 210 has an internal memory 320 of 128 Kbytes, i.e., SRAM or CACHE, and an external memory interface unit 330, in order to connect with external flash ROM 340 and SRAM 350.

The communication process and system control unit 210 further includes various registers and interrupt and timer controllers 360 and a 32-bit general-purpose input/output (GPIO) unit 370.

A Bluetooth bit controller 380 performs forward error correction (FEC), header error control, cyclic redundancy check (CRC), and encryption in order to generate data packets to be transmitted. Here, the Bluetooth bit controller 380 transfers the data packets to a Bluetooth RF transceiver unit 314 via an RF transceiver interface (IF) unit 384. The data packets transferred from the RF transceiver unit 314 via the RF transceiver IF unit 384 are transferred to the Bluetooth bit controller 380. A Bluetooth power controller 382 controls transmitting and receiving power and drives a phase locked loop (PLL) for generating an internal high-speed clock.

The internet connection unit 250 connected to the communication process and system control unit 210 includes an Ethernet controller 311, an xDSL module 312, and a PSTN module 313. Accordingly, the Internet phone is connected to the Internet or a telephone network via the Internet connection unit 250.

A light emitting device (LED) 390 for displaying the connection states to the network and the Bluetooth link is connected to the GPIO unit 370 and controlled by the CPU 310.

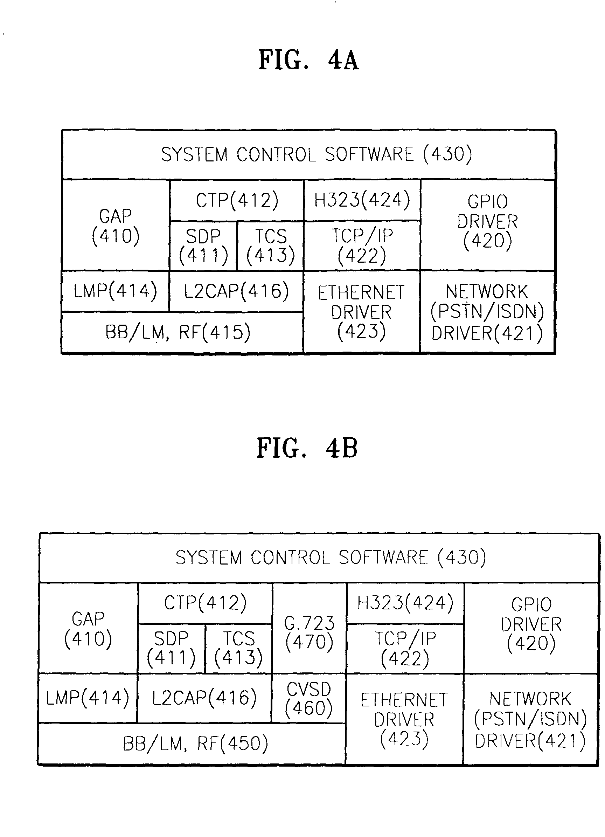

FIG. 4A illustrates a software protocol stack which is mounted in the ROM 350 of the communication process and system control unit 210.

The Bluetooth function is realized by a generic access profile (GAP) 410, a service discovery profile (SDP) 411, a cordless telephony profile (CTP) 412, a telephony control protocol specification (TCS) 413, a link management protocol (LMP) 414, and baseband/link manage (BB/LM) 415.

The GAP 410 supports a Bluetooth cordless link generation and release function and a park mode, and the SDP 411 supports only the cordless telephony service by checking the kinds of services provided by a device in the Bluetooth network. The CTP 412 as a profile for providing the cordless telephony service satisfies the standard for the operation of the TCS 413.

A call control message from the TCS 413 is transferred through an L2CAP 416 as a link control protocol that manages a flow control and error correction function. In addition, the G.723.1 audio packet is transferred through the L2CAP 416.

A GPIO driver 420 controls the LED 390 and a network driver 421 performs the Ethernet, xDSL, and PSTN connection functions.

The call connection process by the TCS 413 is performed while interacting with H.323 and the connection to the Internet phone of the other side is performed by H.323 protocol. To this end, there are a TCP/IP protocol 422 and an Ethernet driver and Ethernet controller 423. System control software 430 manages Bluetooth profile, controls the Internet telephony protocol 424, i.e., H.323, and manages password resources.

FIG. 4B illustrates a software protocol stack mounted in the ROM 350 of the communication process and system control unit 210, which is used when communicating with a cellular phone having the Bluetooth interface.

The protocol stack shown in FIG. 4B is similar to that of FIG. 4A. However, continuous variable slope delta (CSVD) 460 and G.723 470 stacks are mounted on the BB/LM and RF 450.

FIG. 5 is a block diagram of an embodiment of the cordless handset of the Internet cordless phone according to the present invention.

The cordless handset includes the communication process and handset control unit 510, the user input unit 520, the screen display unit 530, the memory unit 540, the audio process unit 550, and the Bluetooth RF transceiver unit 560.

The communication process and handset control unit 510 is formed of a high-speed processor module, a Bluetooth RF transceiver IF module, a Bluetooth baseband process module, a memory control module, and a general-purpose input/output unit, which are operated by programs.

In addition, the communication process and handset control unit 510 processes keypad signals transferred from the user input unit 520, generates character data to be output to the screen display unit 530, and performs an audio codec function for compressing and decompressing audio data. Furthermore, the communication process and handset control unit 510 exchanges the audio data with the audio process unit 550, generates the audio data to be output from the audio process unit 550 to transfer the audio data to the audio process unit 550, and processes the communication for exchanging wireless data with the Internet phone station.

The audio codec function for compressing and decompressing the audio data is realized by the G.723.1 method or the G.729 method, which are the international standard methods. The communication process for exchanging wireless data with the Internet phone station is performed through the ACL link, which enables establishment of a cordless link between one master and seven slaves in the Bluetooth standard. The handsets exchange call establishment and release messages, audio codec data, and user interface data with the Internet phone station corresponding to the master, through the ACL links. In addition, the handsets periodically receive the date and time data from the Internet phone station.

The user input unit 520 is formed of a keypad and a driving device. When the user presses the keypad, the corresponding signals are transferred to the communication process and handset control unit 510 via the general-purpose input/output unit of the communication process and handset control unit 510. Here, the keypad includes numeral buttons, a send button, and other menu buttons.

The screen display unit 530, which is formed of a character displaying LCD and a driving device, displays a telephone number input by the user, a caller ID, a telephone directory stored in the memory unit, date and time data, and process result of the functions selected by the user.

The memory unit 540 is formed of a flash memory for storing programs to be performed by the communication process and handset control unit 510 and data to be stored for a long time, such as a telephone directory, and RAM for storing temporary data.

The audio process unit 550 converts digital audio data transferred from the communication process and handset control unit 510 and various audio data, such as ringback tone and dial tone, into analog signals in order to output the converted analog signals through a speaker. In addition, the audio process unit 550 converts the analog audio signal received through a microphone into digital data in order to transfer the converted digital data to the communication process and handset control unit 510.

The Bluetooth RF transceiver unit 560 cordlessly transfers the signals transferred through the Bluetooth RF transceiver IF of the communication process and handset control unit 510, to the Internet phone station 100. In addition, the Bluetooth RF transceiver unit 560 transfers the signals transferred from the Bluetooth RF transceiver unit 240 of the Internet phone station 100, to the communication process and handset control unit 510.

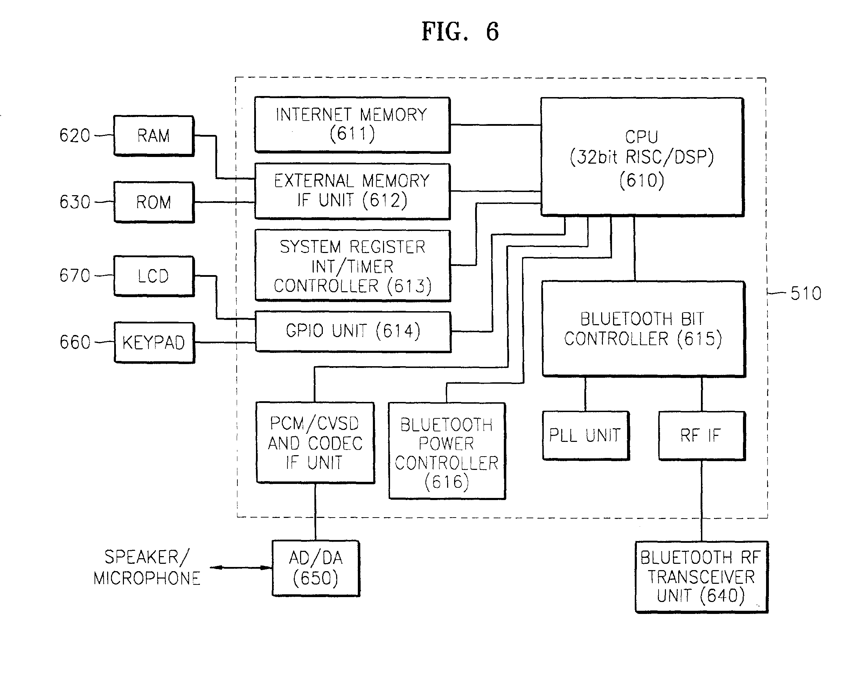

FIG. 6 is a detailed block diagram illustrating the cordless handset.

A CPU 610 which is a 32-bit RISC processor processes DSP commands. The communication process and handset control unit 510 has an internal memory 611 of 128 Kbytes, i.e., SRAM or CACHE, and an external memory interface unit 612, in order to connect with external flash ROM 630 and SRAM 620.

The communication process and handset control unit 510 further includes various registers and interrupt and timer controllers 613 and a 32-bit GPIO unit 614.

A Bluetooth bit controller 615 performs FEC, header error control, CRC, and encryption in order to generate data to be transmitted. Here, the Bluetooth bit controller 615 transfers the data to a Bluetooth RF transceiver unit 640 via an RF transceiver IF unit. The data transferred from the RF transceiver unit 640 via the RF transceiver IF unit are transferred to the Bluetooth bit controller 615.

A Bluetooth power controller 616 controls transmitting and receiving power and drives a PLL for generating an internal high-speed clock.

The communication process and handset control unit 510 performs CVSD and PCM codec processes by using the DSP function and transfers the processed audio data to an external analog device 650, i.e., analog to digital (A/D) converter and digital to analog (D/A) converter, in order to output the audio data to a microphone and a speaker. The communication process and handset control unit 510 encodes the audio signals, which are input from the microphone, into the G.723.1 audio data by using the DSP function, and decodes the received audio packets according to the G.723.1 standard, in order to output the decoded audio packets to the speaker.

A keypad 660 and an LCD 670 which serve as user interfaces are connected to the GPIO unit 614 to perform key inputs and data output, respectively. The keypad 660 examines the state of an input key every 10 msec by using the GPIO unit 614. If the same key is input more than three times, the keypad 660 determines that a correct key is input. The LCD 670, which displays the key input by the user and the telephone number, IP address, Internet phone number, or name of the other side when receiving a call, is connected to the GPIO unit 614 and controlled by the CPU 610.

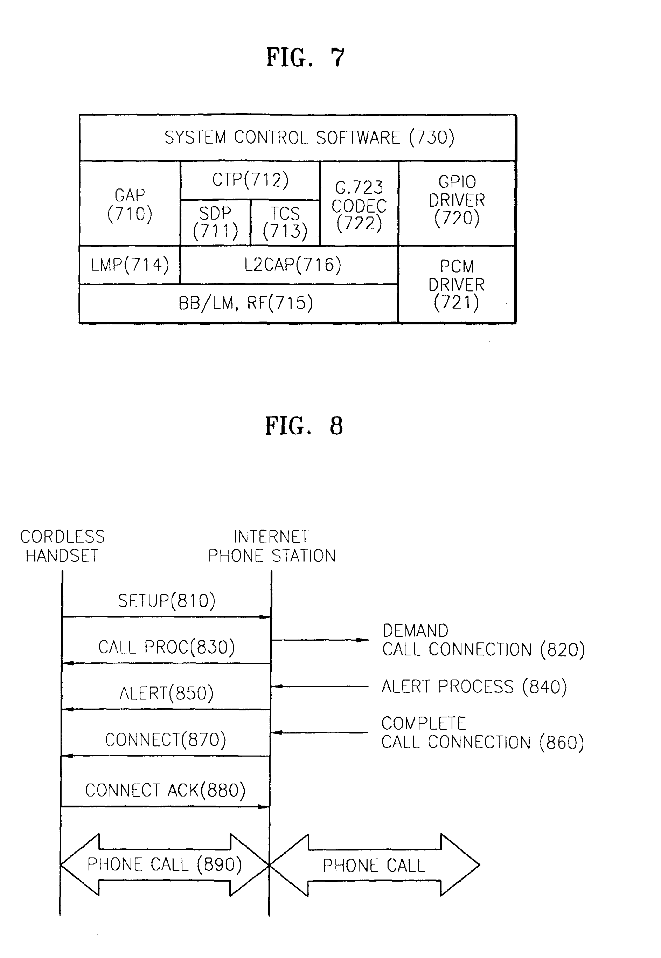

FIG. 7 illustrates a software protocol stack, which is mounted in the ROM 630 of the communication process and handset control unit 510.

The Bluetooth function is realized by a GAP 710, an SDP 711, a CTP 712, a TCS 713, an LMP 714, and a BB/LM 715.

The GAP 710 supports a Bluetooth cordless links generating and releasing function and a park mode, and the SDP 711 supports only the cordless telephony service by checking the kinds of services provided by a device in the Bluetooth network. The CTP 712 serves as a profile for providing the cordless telephony service and satisfies the standard for the operation of the TCS 713.

The call is established and released and the G.723.1 audio packets are transmitted and received through the TCS 713. A call control message from the TCS 713 is transferred through an L2CAP 716 as a link control protocol, which manages a flow control and error correction function. In addition, the packets of the G.723.1 audio codec 722 are transferred and received through the L2CAP 716. A GPIO driver 720 controls the keypad 660 and the LCD 670, and a PCM driver 721 provides the audio data to the G.723.1 audio encoder and outputs the decoded PCM data to the speaker.

The system control software 730 manages the Bluetooth profile, the user data and passwords, and the system according to the functions selected by the user, i.e., the Internet phone, PSTN phone selection, and abbreviated dialing.

FIG. 8 illustrates an example of a calling signal connection process for making an Internet call by using the cordless handset.

When a user presses the Internet phone number of the other side, a setup message is transferred to the Internet phone station in step 810. The Internet phone station transfers a call connection demanding message to the other side over the Internet by the H.323 method or the SIP method in step 820 and transfers a call process message to the cordless handset in order to report that a call is in progress in step 830.

When the Internet phone station receives an alert process message from the other side in step 840, the Internet phone station transfers an alert message to the cordless handset so that the cordless handset generates a ring-back tone signal through the speaker in step 850.

Next, when the Internet phone station receives a call connection completion message from the other side in step 860, the Internet phone station transfers a connection message to the cordless handset in step 870. Thereafter, the cordless handset transfers a connection acknowledgement message to the Internet phone station to prepare for making a call in step 880. Coded audio data are transmitted and received between the Internet phone station and the cordless handset to make a call to the other side in step 890.

The messages, which are used in the calling signal connection process between the Internet phone station and the cordless handset, are transferred through the ACL links.

If the other cordless handset makes a call when one cordless handset is making a call, the same calling signal connection process described above is performed, because each cordless handset is distinguished by predetermined Internet phone numbers.

In addition, if the Internet phone station further includes the compressed audio signal conversion unit, the cellular phone with the Bluetooth function may connect to the Internet phone station instead of the cordless handset.

The process for making a call by using the cellular phone with the Bluetooth function is the same as the calling signal connection process for making a call by using the cordless handset shown in FIG. 8. To this end, the Internet phone station has to have the compressed audio signal conversion unit for converting the CVSD or PCM audio signal to the G.723.1 audio signal. Accordingly, the CVSD or PCM audio signal transferred from the cellular phone with the Bluetooth function through the SCO link is converted into the G.723.1 audio signal and transferred to the Internet phone station. In addition, the G.723.1 audio signal is converted into the CVSD or PCM audio signal and transferred to the cellular phone with the Bluetooth function.

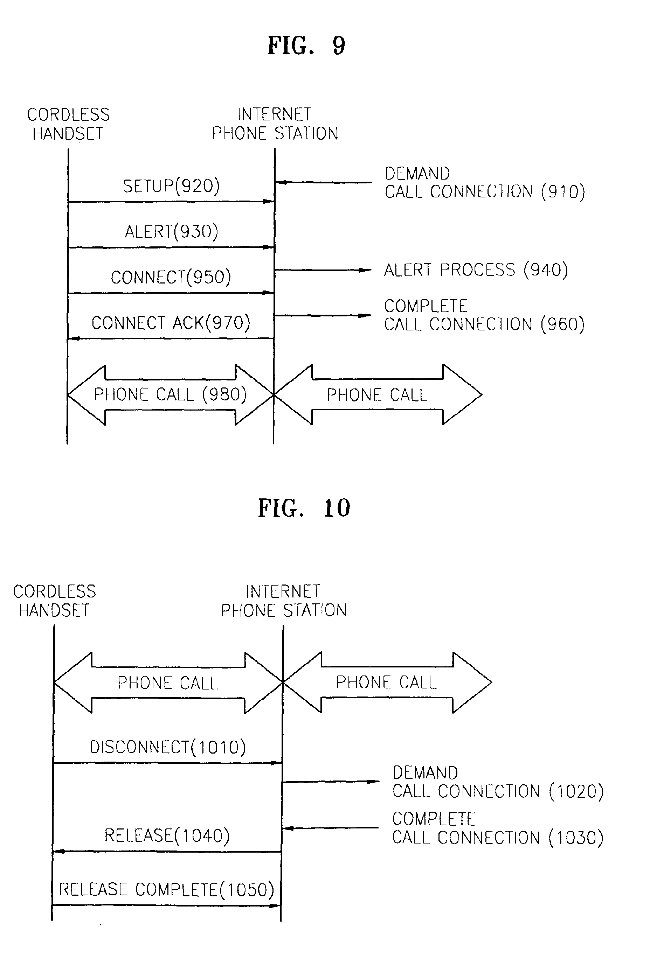

FIG. 9 illustrates an example of a receiving signal connection process for receiving an Internet call from the outside by using the cordless handset.

When the Internet phone station receives a call connection demanding message over the Internet by the H.323 method or the SIP method in step 910, the Internet phone station transfers a setup message including the Internet phone number of the cordless handset, to which the call connection demanding message is directed, to the cordless handset in step 920.

A caller ID is included in the setup message only when a caller ID service is provided. The cordless handset, which received the setup message, generates a ringing tone and transfers an alert message to the Internet phone station in step 930.

The Internet phone station, which received the alert message, transfers an alert progress message to the other side in step 940. When a user receives the call, the cordless handset transfers a connection message to the Internet phone station in step 950, and the Internet phone station transfers a call connection completion message to the other side in step 960 and a connection acknowledgement message to the cordless handset in step 970, in order to prepare for making a call. Thereafter, the coded audio data are transmitted and received between the Internet phone station and the cordless handset to make a call to the other side in step 980.

The messages used in the receiving signal connection process between the Internet phone station and the cordless handset are transmitted through the ACL links.

If the other cordless handset receives a call when one cordless handset is making a call, the same receiving signal connection process described above is performed, because each cordless handset is distinguished by predetermined Internet phone numbers.

FIG. 10 illustrates a call release process for ending a telephone call.

When the cordless handset disconnects a call, a disconnection message is transferred from the cordless handset to the Internet phone station in step 1010. Accordingly, the Internet phone station transfers a connection release demanding message to the other side over the Internet by the H.323 method or the SIP method in step 1020. Thereafter, when the Internet phone station receives a connection release completion message from the other side in step 1030, the Internet phone station transfers a call release message to the cordless handset in step 1040. Accordingly, the cordless handset transmits a call release completion message to the Internet phone station in step 1050, thereby releasing the call.

The messages used in the call release process between the Internet phone station and the cordless handset are transmitted through the ACL links.

If the other cordless handset disconnects a call, the same call release process as described above is performed.

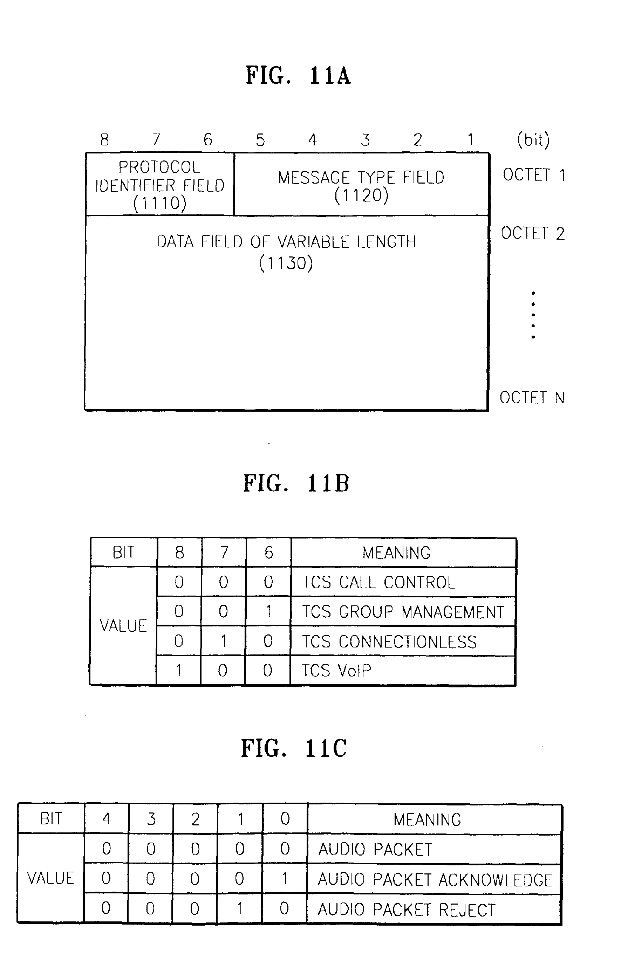

FIGS. 11A through 11C illustrate the data configurations of packets used in the ACL link.

Referring to FIG. 11A, the data configuration of a packet is formed of a 3-bit protocol identifier field 1110, a 5-bit message type field 1120, and a data field 1130 of variable length which corresponds to the protocol identifier field 1110 and the message type field 1120.

When the value of the protocol identifier field 1110 is 000, it is known that the data field 1130 of variable length transfers telephony control protocol specification (TCS) call control data, which is defined in the Bluetooth standard. When the values of the protocol identifier field 1110 are 001 and 101, it is known that the data field 1130 transmits TCS group management data and TCS connectionless data, respectively.

The above values have been defined in the Bluetooth standard; however, a new value for the protocol identifier field 1110 is defined in the present invention. In other words, when the value of the protocol identifier field 1110 is 100, the data field 1130 of variable length transfers the compressed audio data. Although the Bluetooth standard prescribes to allot the SCO links and transfer the audio signals, a predetermined value, meaning the transfer of the audio packets, is set in the protocol identifier of the data structure, which is used in the ACL link as a channel that transfers a control message for the call establishment, so that the data field 1130 of variable length transfers the audio packets according to the predetermined value in the present invention.

FIG. 11 C illustrates the kinds of message type field values. When the value of the message type field 1120 is 00000, it is known that the compressed audio data are present in the data field 1130 of variable length. Here, the data field 1130 of variable length further includes the information on the kind and length of the compressed audio data.

When the value of the message type field 1120 is 00001, which is known as a case where the flow control function is used, it is known that the Internet phone has well received the compressed audio data from the other side and prepared for receiving the compressed audio data. When the value of the message type field 1120 is 00010, it is known that a buffer is full or the buffer cannot receive the compressed audio data any more from the other side. In other words, the value 00010 is used for demanding to stop the transmission of the compressed audio data until the Internet phone sends an audio packet acknowledgement message to the other side.

Since the transmission speed of the audio packets is less than 6.3 kbps for the case of G.723.1, the audio packets are sufficiently transferred by putting them on the data field 1130 of variable length.

The method for transmitting and receiving the audio packets includes a method for allotting a new ACL link by a call establishment message demanding an ACL link for traffic and transmitting and receiving the audio packets through the allotted ACL link after the call is established.

The present invention can be realized as a program which can be performed by a computer, and realized in the computer that performs the program by reading from a recording medium on which the program is stored.

In addition, the data structure used in the embodiments of the present invention can be recorded on a recording medium which can be readout by a computer, by various methods.

Here, the recording medium includes any kind of recording device in which data are recorded, such as magnetic recording media, i.e., ROM, a floppy disk, and a hard disk, optical recording media, i.e., CD-ROM and DVD, and carrier waves, i.e., transmission over the Internet.

By using the Internet cordless phone according to the present invention, a maximum of seven people can make calls at the same time over one Internet line so that the cost for making calls is reduced and mobility limitations are overcome.

In addition, although the SCO link uses three channels at maximum, the ACL link can use seven channels at maximum and the traffic is only 44.1 kbps, because the traffic for one channel is only 6.3 kbps.

In particular, a maximum of seven people can receive calls from the outside as well as make calls to the outside so that each person can have their own distinguished cordless handset. Therefore, each person can make and receive calls regardless of who else is making/receiving calls. Furthermore, each person may record their own information, such as a telephone directory, in the cordless handset.

Therefore, the Internet cordless phone according to the present invention can be used as an Internet phone in homes, offices, and small offices, at a low cost while ensuring privacy.

While this invention has been particularly shown and described with reference to preferred embodiments thereof, it will be understood by those skilled in the art that various changes in form and details may be made therein without departing from the spirit and scope of the invention as defined by the appended claims.

## Claims

1. An Internet phone station comprising:
a communication process and system control unit for converting audio packets of a user into Internet protocol (IP) data according to an Internet phone protocol, extracting audio packets from the IP data transmitted from the other side, and wirelessly transmitting data to and receiving data from a cordless handset;
a memory unit for storing programs to be performed in the communication process and system control unit and data;
a real time clock (RTC) unit for generating date and time data to transmit the data to the communication process and system control unit and establishing date and time data according to commands from the communication process and system control unit;
a Bluetooth radio frequency (RF) transceiver unit for transferring the audio packets output from the communication process and system control unit to the cordless handset and transmitting the audio packets from the cordless handset to the communication process and system control unit; and
an Internet connection unit connected to the Internet for transferring the audio packets from the cordless handset according to the Internet phone protocol and receiving Internet phone protocol data from the other side.

2. The Internet phone station of claim 1, wherein the communication process and system control unit exchanges call establishment and release data, coded audio data, and user interface data with the cordless handset through an asynchronous connection-less (ACL) link, which is prescribed in the Bluetooth standard.

3. The Internet phone station of claim 1, wherein the Internet phone protocol is processed by the H.323 method or the session initiation protocol (SIP) method as an international standard.

4. The Internet phone station of claim 1, wherein the RTC unit generates and re-establishes date and time data according to data input from a user.

5. The Internet phone station of claim 1 further comprising a compressed audio signal conversion unit for converting PCM data received from an audio terminal having a Bluetooth interface into data defined by the G.723.1 or G.729 international standard in order to transfer the data to the Internet connection unit through the communication process and system control unit.

6. A cordless handset for an Internet phone, comprising:
a communication process and handset control unit for processing communication required for wirelessly exchanging data with an Internet phone station and controlling each function unit;
a user input unit for receiving commands from a user and transferring the commands to the communication process and handset control unit;
a screen display unit for displaying information input by the user and information on the state of the handset;
a memory unit for storing programs to be performed in the communication process and handset control unit and telephone numbers;
an audio process unit for converting digital audio data transferred from the communication process and handset control unit into analog signals to output to a speaker and converting audio signals from a microphone into digital audio data to transfer to the communication process and handset control unit; and
a Bluetooth RF transceiver unit for transmitting audio packets from the communication process and handset control unit to the Internet phone station and receiving audio packets from the Internet phone station to transfer to the communication process and handset control unit.

7. The cordless handset of claim 6, wherein a plurality of cordless handsets are arranged and different identifications (ID) are allotted to each cordless handset in order to independently connect with the Internet phone station at the same time.

8. The cordless handset of claim 6, wherein the communication process and handset control unit exchanges call establishment and release data, coded audio data, and user interface data with the Internet phone station through an ACL link, which is prescribed in the Bluetooth standard.

9. The cordless handset of claim 8, wherein the ACL link is either an ACL link that is pre-established for establishing calls, or a new ACL link.

10. An Internet cordless phone comprising:
an Internet phone station connected to the Internet for receiving data transmitted by the H.323 method or the SIP method as an international standard; and
a cordless handset for compressing audio packets from a user according to the G.723.1 or G.729 international standard to transmit to the Internet phone station through a Bluetooth ACL link.

11. A method of connecting a calling signal for a cordless handset to make an Internet call, the method comprising:
(a) establishing an ACL link to an Internet phone station;
(b) receiving the Internet telephone number of the other side;
(c) transmitting a setup message required for a call establishment, which corresponds to the received Internet telephone number, to the Internet phone station through the established ACL link;
(d) transmitting a message demanding call connection from the Internet phone station, which received the setup message, to the other side over the Internet;
(e) receiving a call process message from the Internet phone station through the established ACL link, after transmitting the message demanding call connection;
(f) receiving an alert process message from the other side by the Internet phone station and receiving an alert message from the Internet phone station through the established ACL link;
(g) receiving a connection message from the Internet phone station through the ACL link according to the completion of a call connection over the Internet by the Internet phone station; and
(h) transmitting a connection acknowledgement message to the Internet phone station through the ACL link when receiving the connection message.

12. A method of connecting a receiving signal for a cordless handset to receive an Internet call, the method comprising:
(a) receiving a message demanding call connection from an Internet phone station;
(b) establishing an ACL link to the Internet phone station when the received message demanding call connection corresponds to the cordless handset;
(c) receiving a setup message required for establishing a call from the Internet phone station, which has received the call connection message from the other side, through the established ACL link;
(d) transmitting an alert message to the Internet phone station through the established ACL link according to receipt of the setup message and transmitting an alert process message from the Internet phone station to the other side;
(e) transmitting a connection message to the Internet phone station through the established ACL link according to the Internet phone station, which has transmitted the alert process message, and transmitting a call connection completion message from the Internet phone station, which received the connection message, to the other side; and
(f) receiving a connection acknowledgement message from the Internet phone station through the established ACL link after the Internet phone station received the call connection completion message, in order to establish a call channel.

13. A recording medium that can be read by a computer and stores programs corresponding to the method of one of claims 11 and 12.

14. A data structure, which is used for transferring compressed audio data through an ACL link and formed of a protocol identifier field, a message type field, and a transmitting data filed of variable length corresponding to the values of the protocol identifier field and the message type filed, wherein the transmitting data field of variable length transmits the compressed audio data in the case where the protocol identifier field stores data denoting the transfer of the compressed audio data through the ACL link.

15. A data structure used for transferring compressed audio data through an ACL link, the data structure comprising:
a protocol identifier field for representing a data to be transferred is a compressed audio data;
a message type field for representing the state of use of a flow control function and the state or receipt of the compressed audio data in the case where the protocol identifier field stores data denoting the transfer of the compressed audio data; and
a transmitting data field of variable length for storing a compressed audio data corresponding to the protocol identifier field and the message type field.

16. The data structure used for transferring the compressed audio data through the ACL link of claim 14 or 15, wherein the compressed audio data is compressed by the G723.1 or G729 international standard method.
